# EUROPÄISCHE PATENTANMELDUNG

(11) **EP 3 733 247 A1**
(43) Veröffentlichungstag der Anmeldung: **04.11.2020**
(21) Anmeldenummer: 20170372.5
(22) Anmeldetag: 20.04.2020
(51) Int. Cl.: A62C 3/16, A62C 35/13, H01M 2/10, H01M 10/613, H01M 10/625, H01M 10/63, H01M 10/6567

(54) **BRANDUNTERDRÜCKUNGSSYSTEM FÜR BATTERIESYSTEME**

(30) Priorität: 26.04.2019 DE 202019102367 U
(71) Anmelder: Solis Perez, Edgar Roberto, 23554 Lübeck (DE)
(72) Erfinder: Solis Perez, Edgar Roberto, 23554 Lübeck (DE)
(74) Vertreter: RGTH

(57) **Zusammenfassung**

Offenbart ist ein Brandunterdrückungssystem (10), insbesondere für Batteriesysteme (20), aufweisend eine Branderkennungsvorrichtung (40), mindestens einen Löschmittelbehälter (11) zum Bevorraten eines Löschmittels, mindestens ein durch die Branderkennungsvorrichtung (40) steuerbares Ventil (30) und aufweisend mindestens eine über fluidführende Leitungen (12) mit dem Ventil (30) verbindbare Düse (50) zum Freisetzen des Löschmittels, wobei das mindestens eine Ventil (30) als ein Bereichsventil ausgestaltet ist und für eine selektive Löschung und/oder Kühlung von Batteriezellen (22), insbesondere des Batteriesystems (20), durch die Branderkennungsvorrichtung (40) ansteuerbar ist. Des Weiteren ist ein Batteriesystem (20) offenbart.

## Beschreibung

Die Erfindung betrifft ein Brandunterdrückungssystem, insbesondere für Batteriesysteme, aufweisend eine Branderkennungsvorrichtung, mindestens einen Löschmittelbehälter zum Bevorraten eines Löschmittels, mindestens ein durch die Branderkennungsvorrichtung steuerbares Ventil und aufweisend mindestens eine über fluidführende Leitungen mit dem Ventil verbindbare Düse zum Freisetzen des Löschmittels. Des Weiteren betrifft die Erfindung ein Batteriesystem.

### Stand der Technik

Elektrisch angetriebene Fahrzeuge gewinnen zunehmend an Bedeutung. Zum Versorgen der Antriebsmotoren der Fahrzeuge mit elektrischer Energie werden hauptsächlich Batteriesysteme eingesetzt, welche auf der Lithium-Ionen-Technologie basieren. Die Batteriesysteme weisen eine Vielzahl von Batteriezellen auf. Die Batteriezellen stellen jedoch eine potentielle Brandgefahr dar. Im Brandfall können die Batteriezellen Temperaturen von über 660°C erreichen, welche dem Schmelzpunkt von Aluminium entspricht. Als zusätzliche Gefahren besteht in einem Brandfall Explosionsgefahr sowie die Gefahr, dass giftige Gase aus den Batteriezellen entweichen können.

Es sind bereits Systeme zur thermischen Überwachung von Batteriesystemen bekannt, die passive oder aktive Kühlkonzepte zum Durchführen einer Temperaturregulierung der Batteriezellen nutzten. Hierdurch kann ein Batteriesystem unter optimalen thermischen Bedingungen, beispielsweise zwischen 20°C und 40°C, betrieben werden. Derartige Kühlkonzepte können jedoch aufgrund von Defekten ausfallen oder bei beschädigten Batteriezellen mit erhöhter Wärmeentwicklung nicht ausreichend Wärme abführen.

In einem Brandfall des Batteriesystems kann die chemisch gespeicherte Energie exotherm freigegeben werden. Beispielsweise kann eine Lithium-Ionen-Batteriezelle im Falle des Versagens ein ca. 7 bis 11 Faches der elektrisch gespeicherten Energie in Form von thermischer Energie freisetzen. Darüber hinaus können einige der eingesetzten Kathodenmaterialien der Batteriezellen bei hohen Temperaturen spontan zerfallen. Da diese Reaktion exotherm ist und zudem Sauerstoff abgibt, der zur Beschleunigung weiterer kritischer Reaktionsabläufe beiträgt, kann es zu einem schnellen und unkontrollierbaren thermischen Durchgehen der Zelle kommen. Bei einem thermischen Durchgehen von Batteriezellen können benachbarte Batteriezellen ebenfalls beschädigt werden und exotherm reagieren, wodurch eine Kettenreaktion entsteht.

Die eingesetzten Batteriesysteme sind üblicherweise in Gehäusen verbaut und in Fahrzeugen oder Gebäuden untergebracht. Hierdurch können brennende Batteriezellen für eine effektive Löschung durch die Feuerwehr nicht direkt erreicht werden.

### Offenbarung der Erfindung

Der Erfindung liegt die Aufgabe zugrunde ein System zum schnellen und effizienten Unterdrücken von exothermen Reaktionen von Batteriezellen eines Batteriesystems zu schaffen.

Diese Aufgabe wird durch die im Anspruch 1 oder Anspruch 9 angegebenen Merkmale gelöst. Weitere vorteilhafte Ausgestaltungen der Erfindung sind in den Unteransprüchen beschrieben.

Gemäß einem Aspekt der Erfindung wird ein Brandunterdrückungssystem, insbesondere für Batteriesysteme, bereitgestellt. Das System weist eine Branderkennungsvorrichtung, mindestens einen Löschmittelbehälter zum Bevorraten eines Löschmittels, mindestens ein durch die Branderkennungsvorrichtung steuerbares Ventil und mindestens eine über fluidführende Leitungen mit dem Ventil verbindbare Düse zum Freisetzen des Löschmittels auf. Das mindestens eine Ventil ist als ein Bereichsventil ausgestaltet und ist für eine selektive Löschung und/oder Kühlung von Batteriezellen, insbesondere des Batteriesystems, durch die Branderkennungsvorrichtung ansteuerbar.

In Bezug auf anlagentechnische Brandschutzmaßnahmen für den Umgang oder die Lagerung von Lithium-haltigen Energiespeichern sind derzeit hinsichtlich der Wirksamkeit von technischen Schutzkonzepten und in Bezug auf die Effektivität von anlagentechnischen Lösungen keine standardisierten Konzepte bekannt. Durch das erfindungsgemäße Brandunterdrückungssystem kann eine Lösung zum Verhindern von einem thermischen Durchgehen von Batteriesystemen bereitgestellt werden, welche in das Batteriesystem integrierbar und somit unmittelbar an der Quelle bzw. Batteriezelle wirken kann.

Das Brandunterdrückungssystem weist vorzugsweise einen oder mehrere Löschmittelbehälter mit einem Löschmittel auf, welches eine größere Kühlleistung als Wasser hat. Das Löschmittel kann in dem Löschmittelbehälter unter Druck eingebracht sein und somit bei einem Freisetzen sich schnell über die fluidführenden Leitungen ausbreiten.

Die Branderkennungsvorrichtung kann einen Teil des Batteriesystems oder das gesamte Batteriesystem hinsichtlich ansteigender Temperaturen oder entweichender Gase überwachen. Wird eine thermische Reaktion einer Batteriezelle des Batteriesystems durch die Branderkennungsvorrichtung erkannt, so kann das Löschmittel durch die Leitungen, über die Ventile geleitet und anschließend durch die Düsen örtlich begrenzt versprüht werden. Hierdurch kann eine selektive Kühlung oder Löschung von einzelnen Batteriezellen oder Batteriemodulen realisiert werden. Vorzugsweise können hierfür Bereichs- oder Sektionsventile eingesetzt werden. Diese sorgen dafür, dass nur in dem Bereich, in welchem beispielsweise ein Branderkennungselement ausgelöst wurde, vom Löschmittel beaufschlagt wird. Alle andere an das Brandunterdrückungssystem bzw. Löschsystem angekoppelten oder angeschlossenen Bereiche des Batteriesystems werden nicht mit dem Löschmittel beaufschlagt.

Die Düse bzw. Aufgabedüse dient dazu, das Löschmittel mit dem erforderlichen Druck, einer definierten Sprühcharakteristik, mit einer geeigneten Tropfengröße und einem optimalen Durchsatzvolumen zumindest bereichsweise abzugeben. Abhängig von dem Einsatzgebiet, können unterschiedliche Düsen mit voneinander abweichenden oder gleichen charakteristischen Eigenschaften in dem Brandunterdrückungssystem verwendet werden.

Das Brandunterdrückungssystem kann autark bzw. von Stromquellen unabhängig und schnell entstehende Brandfälle und thermische Reaktionen von Batteriezellen bereits in Startphasen unterdrücken und somit eine Schadensminimierung betreiben. Insbesondere kann ein möglicher Schaden des Batteriesystems auch durch den selektiven Einsatz des Löschmittels weiter eingegrenzt werden. Des Weiteren kann das Brandunterdrückungssystem besonders kompakt ausgeführt und somit auch in Batteriesystemen von Fahrzeugen integrierbar sein.

Die jeweiligen Komponenten des Brandunterdrückungssystems können gemeinsam oder separat als einzelne Bauteile eingesetzt werden. Insbesondere können die Düsen, Ventile, der Löschmittelbehälter und/oder die Branderkennungsvorrichtung unabhängig voneinander in unterschiedlichen Fahrzeugen oder Batteriesystemen eingesetzt werden.

Die Branderkennungsvorrichtung kann technisch besonders einfach ausgeführt sein, wenn sie mindestens eine thermisch aktivierbare Auslöseeinheit aufweist. Vorzugsweise weist die mindestens eine Auslöseeinheit ein thermisch leitfähiges Gehäuse mit einem im Gehäuse angeordneten Schmelzlot auf. Das Gehäuse kann somit Wärmeschwankungen in seiner Umgebung aufnehmen und aufgrund seiner Wärmeleiteigenschaften an das Schmelzlot im Inneren des Gehäuses weiterleiten. Beim Erreichen einer definierten Grenztemperatur von beispielsweise 93° C schmilzt das Schmelzlot, wodurch die Branderkennungsvorrichtung Maßnahmen gegen die entstehende Wärme veranlassen kann.

Gemäß einem Ausführungsbeispiel ist durch das Schmelzlot der mindestens einen Auslöseeinheit zum Freisetzen des Löschmittels aus dem Löschmittelbehälter eine elektrisch leitfähige Verbindung unterbrechbar und/oder eine gasgefüllte Kapsel aktivierbar und/oder eine Fluidverbindung zum Führen des Löschmittels von dem Ventil zur Düse freilegbar. Hierdurch kann ein Löschvorgang oder ein Kühlvorgang flexibel der durch unterschiedliche Auslösemechanismen eingeleitet werden. Das Schmelzlot kann beispielsweise als eine elektrisch leitfähige Verbindung ausgeführt sein, welche durch eine Auswerteelektronik der Branderkennungsvorrichtung überwacht wird. Bei einer Unterbrechung des Schmelzlots kann dies durch die Branderkennungsvorrichtung registriert und zum Einleiten von Maßnahmen genutzt werden. Bevorzugterweise wird der Löschvorgang oder der Kühlvorgang in einem Bereich eingeleitet, in welchem das Schmelzlot durch Wärmeeinwirkung schmilzt.

Alternativ oder zusätzlich kann durch das Schmelzlot eine gasgefüllte Kapsel aktivierbar bzw. das Gas der Kapsel freisetzbar sein, wenn das Schmelzlot schmilzt. Für die Branderkennung kann hierdurch eine thermopneumatische Auslösung, wie beispielsweise SPY, eingesetzt werden. Es kann somit eine zuverlässige und schnelle Branderkennung unter verschiedenen Umweltbedingungen ermöglicht werden. Zur optimalen Wärmeaufnahme kann das Gehäuse aus Aluminium oder einem anderen Metall bestehen. In dem Gehäuse kann ein als Schmelzlot ausgeführtes thermisches Erkennungselement eingebracht sein. Bei der thermopneumatische Auslösung wird die gasgefüllte Kapsel durch schmelzendes Schmelzlot geöffnet. Das freigesetzte Gas kann über die Leitungen einen Druckschalter am Löschmittelbehälter betätigen, sodass das Löschmittel aus dem Löschmittelbehälter strömen kann.

Gemäß einer weiteren alternativen oder zusätzlichen Ausführungsform kann eine Fluidverbindung zum Führen des Löschmittels von dem Ventil zur Düse freilegbar sein, wenn ein Ventil als Schmelzventil bzw. als eine Sollbruchstelle ausgeführt ist und mit zunehmender Temperatur das Löschmittel freisetzt.

Das Brandunterdrückungssystem kann technisch besonders einfach ausgeführt sein, wenn das mindestens eine Ventil durch mindestens eine Auslöseeinheit der Branderkennungsvorrichtung zum Führen des Löschmittels aktivierbar ist. Das Ventil bzw. Bereichsventil kann vorzugsweise durch mindesten eine der Branderkennungselemente bzw. Auslöseeinheiten geöffnet werden. Das Bereichsventil kann hierzu direkt an der fluidführenden Leitung angeordnet sein. An der Leitung können parallel mehrere Bereichsventile angeschlossen sein. Nach dem Öffnen eines Ventils kann ein Auslösesignal an den Löschmittelbehälter bzw. ein Hauptventil des Löschmittelbehälters gesendet werden. Das Auslösesignal kann in Form von elektrischen Signalen oder als Druckwelle der gasgefüllten Kapseln ausgeführt sein. Der Löschmittelbehälter hierdurch geöffnet. Das unter Druck gesetzte Löschmittel kann aus dem geöffneten Löschmittelbehälter entweichen und über die Leitung durch das geöffnete Bereichsventil und anschließend durch die mindestens eine Düse in die Batteriezelle oder das Batteriemodul geleitet werden.

Nach einem weiteren Ausführungsbeispiel ist die mindestens eine Düse direkt mit einer Auslöseeinheit der Branderkennungsvorrichtung fluidleitend verbindbar. Hierdurch können eine oder mehrere Düsen für das Löschmittel direkt an das Branderkennungselement bzw. Auslöseelement angekoppelt sein.

Das Brandunterdrückungssystem kann besonders kompakt ausgeführt und flexibel einsetzbar sein, wenn die mindestens eine Düse, eine Auslöseeinheit und ein Ventil als eine Löschkomponente ausgeführt sind oder zu einer Löschkomponente miteinander verbindbar sind. Bevorzugterweise sind mehrere Löschkomponenten parallel und/oder seriell über fluidführende Leitungen mit dem Löschmittelbehälter verbindbar. Hierdurch können die Düse, die Auslöseeinheit und das Ventil einen Endabschnitt des Brandunterdrückungssystems ausbilden, welcher an unterschiedlichen Positionen im Batteriesystem montierbar ist. Die fluidführende Leitung kann die jeweiligen Löschkomponenten mit dem Löschmittelbehälter verbinden, wodurch das Brandunterdrückungssystem in bestehende Batteriesysteme einsetzbar ist.

Gemäß einer weiteren Ausführungsform ist nach einem Aktivieren von mindestens einem Ventil ein Auslösesignal an den Löschmittelbehälter zum Freigeben des Löschmittels erzeugbar. Das Ventil kann vorzugsweise direkt mit der Löschleitung bzw. der fluidführenden Leitung verbunden sein. An der Leitung können mehrere Ventile angeschlossen sein. Nach dem Öffnen des Ventils wird ein Auslösesignal an den Löschmittelbehälter weitergeleitet. Der Löschmittelbehälter wird durch das Auslösesignal aktiviert und das Löschmittel freigesetzt.

Sobald das Schmelzlot der Auslöseeinheit eine elektrische Verbindung unterbricht, kann das Auslösesignal durch die Auswerteelektronik zum Öffnen eines oder mehrerer Ventile generiert werden. Hierdurch kann das Freisetzen des Löschmittels elektronisch gesteuert durch die Branderkennungsvorrichtung veranlasst werden.

Nach einem weiteren Aspekt der Erfindung wird ein Batteriesystem mit einem erfindungsgemäßen Brandunterdrückungssystem bereitgestellt. Das Batteriesystem weist eine Vielzahl an Batteriezellen auf, wobei die Batteriezellen zu Batteriemodulen zusammengefasst und als Batteriemodule voneinander separiert sind.

Das mit dem Brandunterdrückungssystem bestückte Batteriesystem kann ein höheres Sicherheitsniveau bieten, da mögliche exotherme Reaktionen bereits bei der Entstehung unterdrückt werden. Hierdurch kann die Sicherheit bei einem Umgang mit Batteriesystemen, welche auf der Lithium-Ionen-Technologie basieren, erhöht und mögliche Schäden minimiert werden.

Gemäß einem Ausführungsbeispiel ist in jedes Batteriemodul mindestens eine Düse des Brandunterdrückungssystems integriert. Alternativ kann an jedem Batteriemodul mindestens eine Düse münden. Insbesondere können hierbei auch Löschkomponenten in die jeweiligen Batteriemodule eingebracht oder in der Nähe der Batteriemodule angeordnet werden. Somit kann eine direkte und schnelle Branderkennung und - bekämpfung realisiert werden, da das Löschmittel unmittelbar an der Quelle der Brandgefahr freigesetzt wird.

Nach einem weiteren Aspekt der Erfindung wird ein Fahrzeug bereitgestellt, welches ein Batteriesystem aufweist, wobei das Fahrzeug ein eingebautes Brandunterdrückungssystem zum Löschen und/oder Kühlen von Batteriezellen des Batteriesystems aufweist.

Nachstehend werden mehrere Ausführungsbeispiele der Erfindung anhand der Zeichnungen näher erläutert. Es zeigen:
Fig. 1 eine perspektivische Darstellung eines Fahrzeugs mit einem Brandunterdrückungssystem gemäß einer Ausführungsform der Erfindung, und
Fig. 2 eine Schnittdarstellung einer erfindungsgemäßen Löschkomponente des Brandunterdrückungssystems gemäß einer weiteren Ausführungsform.

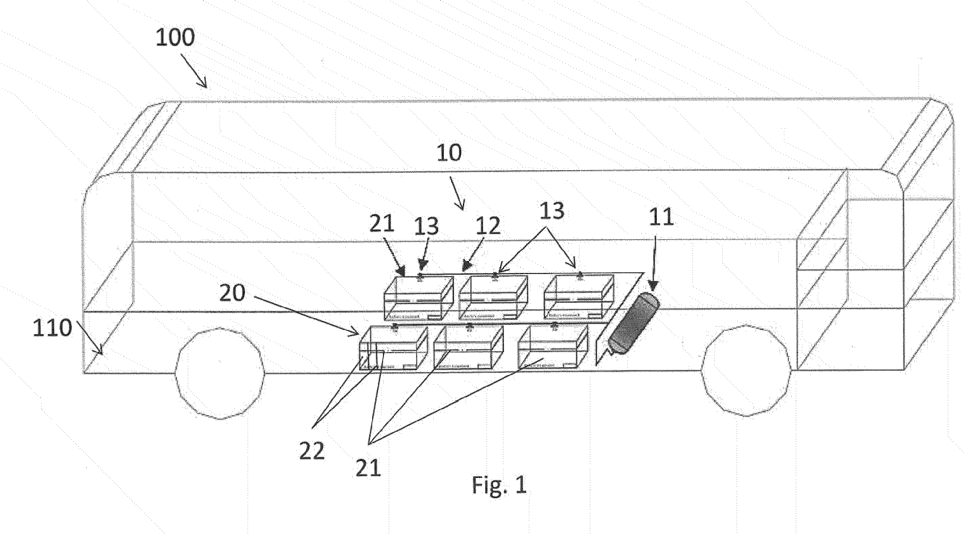

Die Fig. 1 zeigt eine perspektivische Darstellung eines Fahrzeugs 100 mit einem Brandunterdrückungssystem 10 gemäß einer Ausführungsform der Erfindung. Das Brandunterdrückungssystem 10 weist einen Löschmittelbehälter 11 zum Bevorraten eines Löschmittels und mehrere über fluidführende Leitungen 12 mit dem Löschmittelbehälter 11 verbundene Löschkomponenten 13 zum örtlich begrenzten Freisetzen des Löschmittels auf.

Das Brandunterdrückungssystem 10 dient zum Löschen oder Kühlen von Batteriemodulen 21 eines Batteriesystems 20. Jedes Batteriemodul 21 weist mehrere Batteriezellen 22 auf.

Gemäß dem Ausführungsbeispiel weist das Batteriesystem 20 sechs Batteriemodule 21 auf. An jedem Batteriemodul 21 ist jeweils eine Löschkomponente 13 angeordnet.

Die fluidführenden Leitungen verbinden jeweils drei Löschkomponenten 13 in reihe, wobei die beiden Reihen an Löschkomponenten 13 parallel zueinander über die fluidführenden Leitungen 12 verbunden sind.

Gemäß dem Ausführungsbeispiel ist das Fahrzeug 100 als ein Bus ausgeführt. Das Batteriesystem 20 mit dem integrierten Brandunterdrückungssystem 10 ist an einer Bodenplatte 110 des Fahrzeugs 100 montiert. Das Fahrzeug 100 ist als ein elektrisch angetriebenes Fahrzeug 100 ausgeführt, welches über das Batteriesystem 20 seine elektrische Energie beziehen kann.

Der Löschmittelbehälter 11 ist als ein Druckbehälter ausgeführt, welcher ein gasförmiges oder flüssiges Löschmittel beinhalten kann.

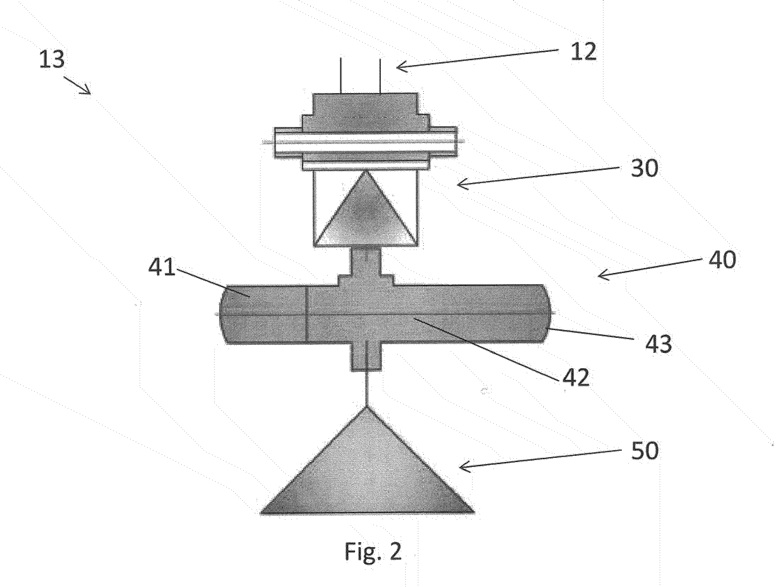

Die Fig. 2 zeigt eine schematische Schnittdarstellung einer erfindungsgemäßen Löschkomponente 13 des Brandunterdrückungssystems 10 gemäß einer weiteren Ausführungsform.

Die Löschkomponente 13 ist als eine Einheit ausgestaltet und besteht aus einem Ventil 30, einer Branderkennungsvorrichtung 40 sowie einer Düse 50.

Die Branderkennungsvorrichtung 40 weist eine gasgefüllte Kapsel 41 auf, welche gemeinsam mit einem Schmelzlot 42 in einem Gehäuse 43 angeordnet ist. Das im Gehäuse 43 mit dem integrierten Schmelzlot 42 ist gemäß dem Ausführungsbeispiel als eine Auslöseeinheit 44 der Branderkennungsvorrichtung 40 ausgeführt. Das Schmelzlot 42 kann durch Wärmeeinwirkung schmelzen und somit ein Gas der gasgefüllten Kapsel 41 freisetzen. Das freigesetzte Gas kann durch einen Druckstoß das Ventil 30 öffnen und somit einen ungehinderte Verbindung zwischen dem Löschmittelbehälter 11 und der Düse 50 herstellen. Hierzu ist das Ventil 30 an der fluidführenden Leitung 12 angeschlossen.

Das Ventil 30 ist als ein Bereichsventil ausgestaltet. Für eine selektive Löschung und/oder Kühlung von Batteriezellen 22 des Batteriesystems 20 ist das Ventil 30 durch die Branderkennungsvorrichtung 40 ansteuerbar.

Die Branderkennungsvorrichtung 40 kann einen Brandfall einer Batteriezelle 22 des Batteriemoduls 21 durch ein schmelzendes Schmelzlot 42 registrieren und selektiv bzw. örtlich auf das entsprechende Batteriemodul 22 begrenzt das Löschmittel über die Düse 50 freisetzen. Hierdurch können stark erhitze Batteriezellen 22 bereits vor einem Brandfall gekühlt werden.

### Bezugszeichenliste

- 100: Fahrzeug
- 110: Bodenplatte des Fahrzeugs

- 10: Brandunterdrückungssystem
- 11: Löschmittelbehälter
- 12: fluidführende Leitung
- 13: Löschkomponente

- 20: Batteriesystem
- 21: Batteriemodul
- 22: Batteriezelle

- 30: Ventil
- 40: Branderkennungsvorrichtung
- 41: gasgefüllte Kapsel
- 42: Schmelzlot
- 43: Gehäuse
- 44: Auslöseeinheit

- 50: Düse

## Patentansprüche

1. Brandunterdrückungssystem (10), insbesondere für Batteriesysteme (20), aufweisend eine Branderkennungsvorrichtung (40), mindestens einen Löschmittelbehälter (11) zum Bevorraten eines Löschmittels, mindestens ein durch die Branderkennungsvorrichtung (40) steuerbares Ventil (30) und aufweisend mindestens eine über fluidführende Leitungen (12) mit dem Ventil (30) verbindbare Düse (50) zum Freisetzen des Löschmittels, wobei das mindestens eine Ventil (30) als ein Bereichsventil ausgestaltet ist und für eine selektive Löschung und/oder Kühlung von Batteriezellen (22), insbesondere des Batteriesystems (20), durch die Branderkennungsvorrichtung (40) ansteuerbar ist.

2. Brandunterdrückungssystem nach Anspruch 1, wobei die Branderkennungsvorrichtung (40) mindestens eine thermisch aktivierbare Auslöseeinheit (44) aufweist, wobei die mindestens eine Auslöseeinheit (44) ein thermisch leitfähiges Gehäuse (43) mit einem im Gehäuse (43) angeordneten Schmelzlot (42) aufweist.

3. Brandunterdrückungssystem nach Anspruch 2, wobei durch das Schmelzlot (42) der mindestens einen Auslöseeinheit (44) zum Freisetzen des Löschmittels aus dem Löschmittelbehälter (11) eine elektrisch leitfähige Verbindung unterbrechbar ist und/oder eine gasgefüllte Kapsel (41) aktivierbar ist und/oder eine Fluidverbindung zum Führen des Löschmittels von dem Ventil (30) zur Düse (50) freilegbar ist.

4. Brandunterdrückungssystem nach Anspruch 2 oder 3, wobei das mindestens eine Ventil (30) durch mindestens eine Auslöseeinheit (44) der Branderkennungsvorrichtung (40) zum Führen des Löschmittels aktivierbar ist.

5. Brandunterdrückungssystem nach einem der Ansprüche 2 bis 4, wobei die mindestens eine Düse (50) direkt mit einer Auslöseeinheit (44) der Branderkennungsvorrichtung (40) fluidleitend verbindbar ist.

6. Brandunterdrückungssystem nach einem der Ansprüche 2 bis 5, wobei die mindestens eine Düse (50), eine Auslöseeinheit (44) und ein Ventil (30) als eine Löschkomponente (13) ausgeführt sind oder zu einer Löschkomponente (13) miteinander verbindbar sind, wobei mehrere Löschkomponenten (13) parallel und/oder seriell über fluidführende Leitungen (12) mit dem Löschmittelbehälter (11) verbindbar sind.

7. Brandunterdrückungssystem nach einem der Ansprüche 1 bis 6, wobei nach einem Aktivieren von mindestens einem Ventil (30) ein Auslösesignal an den Löschmittelbehälter (11) zum Freigeben des Löschmittels erzeugbar ist.

8. Brandunterdrückungssystem nach Anspruch 7, wobei das Auslösesignal zum Freigeben des Löschmittels durch die Branderkennungsvorrichtung (40) erzeugbar ist.

9. Batteriesystem (20) mit einem Brandunterdrückungssystem (10) nach einem der Ansprüche 1 bis 8, aufweisend eine Vielzahl an Batteriezellen (22), wobei die Batteriezellen (22) zu Batteriemodulen (21) zusammengefasst und als Batteriemodule (21) voneinander separiert sind.

10. Batteriesystem nach Anspruch 9, wobei in jedes Batteriemodul (21) mindestens eine Düse (50) des Brandunterdrückungssystems (10) integriert ist oder an jedem Batteriemodul (21) mündet.
